Europäisches Patentamt

**European Patent Office**

Office européen des brevets

(11) Publication number: **0 098 644**
**A2**

# EUROPEAN PATENT APPLICATION

(21) Application number: **83200951.8**

(22) Date of filing: **27.06.83**

(51) Int. Cl.³: **G 01 J 5/00**, G 01 K 1/02,
C 10 B 21/10

(30) Priority: **06.07.82 NL 8202702**

(43) Date of publication of application: **18.01.84**
**Bulletin 84/3**

(84) Designated Contracting States: **BE DE FR GB IT**

(71) Applicant: **HOOGOVENS GROEP B.V., P.O. Box 10.000,**
**NL-1970 CA IJmuiden (NL)**

(72) Inventor: **van Buren, Renée, Cornelis Matersweg 72,**
**NL-1943 GZ Beverwijk (NL)**
Inventor: **Dekker, Dirk, Rossinistraat 43, NL-1962 PA**
**Heemskerk (NL)**
Inventor: **Broersen, Petrus G.J., Blokhuis 23, NL-2161 EV**
**Lisse (NL)**

(74) Representative: **Wentzel, Hendrik Cornelis et al,**
**Hoogovens Groep B.V. P.O. Box 10.000, NL-1970 CA**
**IJmuiden (NL)**

(54) A method of measurement of the temperature in a plurality of combustion chambers of a coke-oven battery and portable apparatus for carrying out such a method.

(57) The temperatures in a plurality of combustion chambers of a coke-oven battery are measured successively using a portable electric pyrometer (1) and a recording device for storing the data relating to each measurement for subsequent processing. In order to decrease the risk of inaccurate transfer of data into and out of the recording device, the measured temperature is converted into digital data by a digital/analogue converter (13) and is then transmitted into a digital memory (3) of portable data processing apparatus (2). The memory is also fed with data relating to the time and location of the measurement. After completion of the sequence of measurements, the data is output from the memory (3).

"A method of measurement of the temperature
in a plurality of combustion chambers of a
coke-oven battery and portable apparatus
for carrying out such a method"

The invention relates to a method of successive
measurement of temperatures in combustion chambers
of a coke oven battery, using an electric portable
pyrometer and recording apparatus for the temporary
storage of data.  The invention also relates to apparatus
for successively measuring temperatures in a plurality
of combustion chambers of a coke oven battery.

A pyroptical instrument suitable to be held
by hand is described in DE-A-2,950,666.  In this,
apparatus for the temporary storage of data is provided
in the form of a tape recorder on which the measured
data are recorded by the operator who reads the information from the pyrometer.

One problem with this is that errors can
be made during recording and on being read-out from
the recorder.  Before further use, the data recorded
on the tape must first be processed by a human by
listing, presentation in the form of graphs and/or
tape punching.  This is followed by further processing
by means of a computer.

0098644

The measurement of temperature in the combustion chambers of a coke oven battery is used to control the combustion process in the combustion chambers and for process control of the coke oven battery. In this specific use, another problem with the prior art method is that the human processing of the measured data is very time-consuming, thereby delaying adjustment of the combustion process in the combustion chambers and control of the coke oven battery process.

The temperature pattern of the combustion chambers of a coke oven battery is a two-peak cycle as a result of the coking period and the regenerator period. The prior art method is too complicated to allow variation of the time at which the temperature measurement is taken, but measuring must occur at fixed times in the temperature cycle. This leads to inaccuracies and limitations.

In "Regelungstechnische Praxis" Vol. 7, No. 7, July 1980, 242-4, there is illustrated a portable pyrometer incorporating a microprocessor having a digital memory and calculation facility, so that measured values can be stored and recalled and calculations such as for example averaging can be carried out. This device does not provide any specific or useful solution of the problems discussed above for coke oven battery measurements.

0098644

US-A-3,977,245 describes temperature and pressure measurements in a deep earth borehole. At regular time intervals, the measured temperature and pressure signals are sampled and stored in a digital memory in the sub-surface instrument, so that after the instrument is brought to the surface, the stored information can be retrieved and displayed. Alternately the digitizing means can be installed at the surface, connected by a cable to the sub-surface instrument, to provide a continuously recording instrument. This non-portable apparatus is of no assistance in solving the discussed problems in coke-oven batteries.

One object of the present invention is to provide a method and apparatus for measurement of temperature in combustion chambers of a coke-oven battery by which the errors which occur due to human intervention, when data are fed into apparatus for temporary storage, and when these data are processed, are largely or completely eliminated.

Another object of the invention is to provide such a method and apparatus by which the time required to process the data is largely eliminated.

According to the invention an analogue/ digital converter converts the measured temperature signals from the pyrometer, and the digitized data is fed directly to portable data processing apparatus having a digital memory for temporary storage of the data and data relating to the time and location of each measurement is also fed into the digital memory. The data processing apparatus is for example a microcomputer. Output of the data temporarily stored in the digital memory takes place after all the measurements have been carried out. The word "direct" or "directly" in the foregoing and in the following is to be understood to mean that in the method and apparatus of the invention, entry and processing of data take place without substantial human intervention as far as the content of the data is concerned. The measured data are fed into the digital memory without the risk of errors, and upon output from the memory may be printed out by means of a printer or plotter, or processed "directly" by a computer.

In order to feed in the data relating to the location of the measurement, the apparatus may also comprise a terminal for use by the operator to produce digital identification data relating for example to the combustion chamber, which data is then entered in the memory together with the temperature data. In this case the terminal is provided with, for example, a keyboard on which the identification data are keyed in. The entered data may be checked, for example, by means of a display at the terminal. Although this reduces the risk of error, the entry of the identification data is not yet "direct" in the sense of the above definition. A predetermined measuring sequence may therefore alternatively be used, and the identification data is then entered "directly" by programming of the microcomputer.

To provide the data on the time of the measurements, the apparatus also preferably includes a digital time clock, whereby data on the time of the measurement, together with the temperature data, are entered "directly" after for example every temperature measurement. This enables the time of the measurement to be established at the same time as the measured data.

Preferably, the apparatus comprising the microcomputer, with the digital memory and optionally the terminal and optionally the time clock, is a separate portable unit which is connected to the pyrometer for direct entering of the temperature data.

Suitably, the data is output from the digital memory after completion of the measurements, directly to a fixed data processing apparatus (computer) which performs further processing and, if desired, display of the data.

The preferred embodiment of the invention will now be described by way of non limitative example with reference to the accompanying drawing, in which:-

Figure 1 is a diagrammatic representation of apparatus embodying the invention; and

Figure 2 illustrates diagrammatically the method of measuring temperatures in combustion chambers of a coke oven battery.

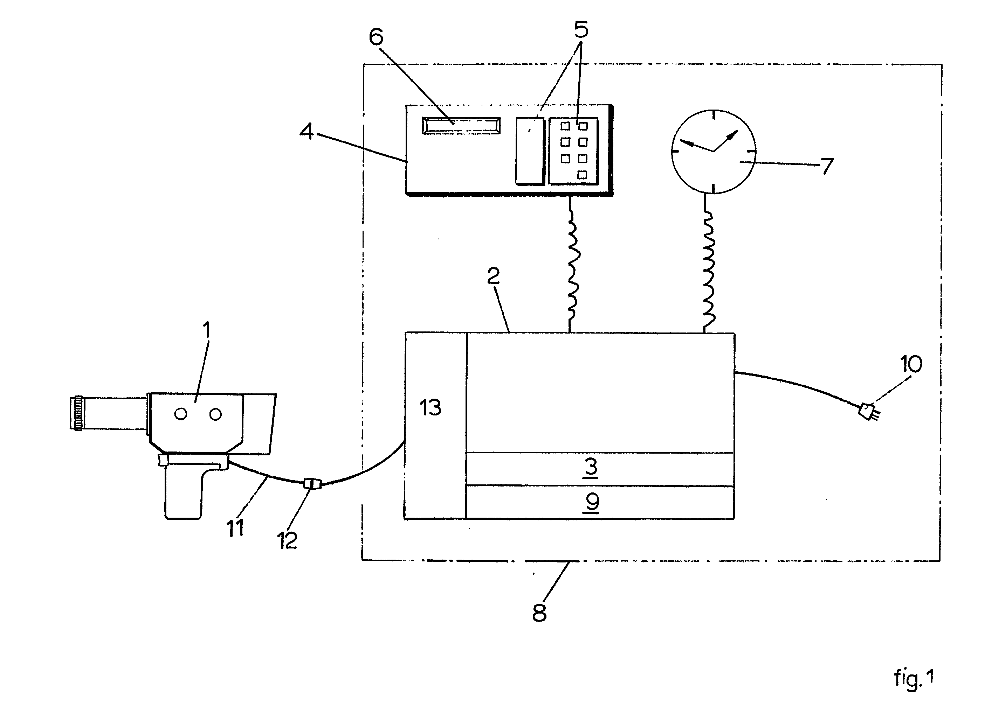

Figure 1 shows an electric manual (i.e. hand-held) pyrometer 1 and diagrammatically data processing apparatus in the form of a microcomputer 2, with a digital memory 3. The measured value obtained on operation of the electric pyrometer 1 is entered directly in the digital memory 3. For this purpose the analogue signal derived from the pyrometer is converted to a digital signal.

In the embodiment shown, the microcomputer has a terminal 4 with a keyboard 5 and display 6. Digital identification data relating to the combustion chamber whose temperature is being measured by the pyrometer 1 are produced by the operator using this keyboard, which data, together with the measured value obtained by the pyrometer, are entered directly in the digital memory 3. If required, the identification data are checked before entry using the display 6.

A digital time clock 7, which is represented symbolically, also forms part of the microcomputer and generates a digital signal which, together with the measured value of temperature, is entered directly in the digital memory 3. The pyrometer 1 and the microcomputer 2 including the terminal 4 and the time clock 7 may be combined to form a single unit. Alternatively, however, the microcomputer 2 including the terminal 4 and the time clock 7, may form a separate portable unit, as denoted by a chain-dot line 8. In either case the microcomputer 2 is connected to the pyrometer by suitable means for the "direct" transmission of the temperature data, such as by the electric cable 11. In the case where there is a separate unit 8, a commercially available pyrometer may suitably be used, which may already be provided with an analogue/ digital converter. If this is not the case, a converter 13 is provided in the separate unit 8.

To enable the successive measurement at different locations to be carried out easily and quickly the instrument is designed to be portable, so that the unit 8 and the pyrometer 1 can be handled by one person. For example, the unit 8 is installed in a box which is carried by means of a shoulder strap. The electrical supply to the unit 8 is denoted at 9.

0098644

As the instrument is portable, power should preferably be supplied by a battery or batteries.

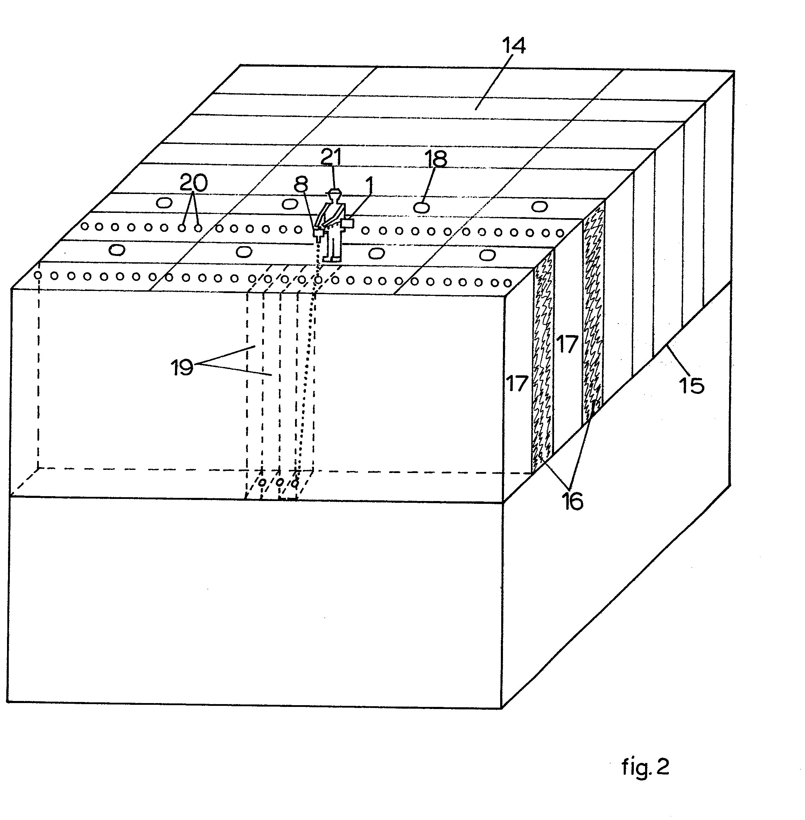

The coke oven battery shown diagrammatically in Figure 2 is a refractory brick structure approximately 10 m high. Coking chambers 16 and combustion walls 17 are located between the oven roof 14 and the regenerator roof 15. The coking chambers are approximately 5 m high, approximately 45 cm wide and approximately 12 m long; they are filled through charging holes 18 by means of a charging car, not shown, travelling over the oven roof.

Each of the about thirty coking chambers in the battery has two adjacent combustion walls 17, each consisting of about thirty combustion chambers, each with a sealable opening 20 in the oven roof. The temperature in the combustion chambers is measured through this opening 20 by an operator 21, using the manual pyrometer 1 of Figure 1. He also carries the separate unit 8. Measurement of the temperature close to the bottom of the combustion chamber 19, at the level with the regenerator roof 15 i.e. a good 5 m, below the oven roof, is particularly important.

It is desirable to measure the temperature in all the about 900 combustion chambers of the battery regularly, i.e. several times per 24 hours. In practice hitherto, however, the measurements have been carried out at fixed times, because of the double period temperature cycle, and they are confined to a limited number of combustion chambers, because the processing of temperatures measured at arbitrary times in all the combustion chambers is too complicated and too time consuming.

Using the method according to the invention however, the operator is equipped with a pyroptical instrument as described above. The operator carries out a number of measurements on the oven roof, and for each measurement the data on the measured temperature, and identification data for the combustion chamber, and also data on the time of the measurement, is entered in digitalised form in the digital memory 3 of the microcomputer 2. The temperature data and the data on the time of the measurement are entered directly in the memory. The need to key in the identification data for the combustion chambers via the terminal 4 is avoided if the operator follows a fixed measuring sequence, which is preprogrammed in the microcomputer; in this way the measurements can be carried out quickly and independently of the temperature cycles of the process, and the data are stored without error in the memory.

After the measurements have been completed, the microcomputer 2 is connected to a fixed computer by means for "direct" data transmission, such as a cable 10, whereupon the data are transmitted "directly" quickly and without error, to the fixed computer, and there are further processed, being for example listed out by a printer or plotted on a graph by a plotter, or, after comparison of the measured values with desired values, are converted to a signal which can be used to control the combustion process of the coke oven battery. Whilst the data are being transmitted from the digital memory 3 to the fixed computer, the connection between microcomputer 2 and pyrometer 1, consisting of the electric cable 11, with plug and socket 12, may be interrupted, when the microcomputer is arranged as a separate unit 8.

0098644

CLAIMS

1.          A method of measurement of the temperatures in a plurality of combustion chambers of a coke-oven battery, wherein from the oven roof of the battery the temperatures are measured successively by means of a portable electric pyrometer (1) and the measured temperature in each case is recorded, characterised in that, at each measurement, the measured temperature is converted into digital data by a digital/analogue converter (13) and is then transmitted, for temporary storage, directly into a digital memory (3) of a data processing apparatus (2) which is also carried by the operator, the digital memory also being fed with data relating to the time and data relating to the location of the measurement, and in that after the succession of measurements has been carried out, the data temporarily stored in the digital memory is output therefrom.

2.          A method according to claim 1 wherein the data relating to the location of the measurements is input into the digital memory (3) at the time of each measurement by means of a terminal (4).

0098644

3. A method according to claim 1 wherein the data relating to the location of the measurements is input into the digital memory (3) automatically by reason of programming of the data processing apparatus (2), the measurements being carried out in a predetermined order.

4. A method according to any one of claims 1 to 3 wherein the data processing apparatus comprises a digital clock (7) from which data relating to the time of the measurement is directly fed into the digital memory (3).

5. A method according to any one of the preceding claims wherein the data is output from the digital memory (3), after the succession of measurements has been completed, directly into a computer, which performs further processing of the data.

6. Portable apparatus for carrying out successive measurement of the temperature in a plurality of combustion chambers of a coke-oven battery, comprising a portable electric pyrometer (1) and portable recording means for recordal of information about the measurement, characterised in that, the apparatus has a digital/analogue converter (13) connected to the pyrometer (1) for conversion of the measured temperature into digital data, and the portable

0098644

recording means comprises data processing means (2) including a digital memory (3), the data processing means (2) being programmed and arranged to receive each said digital data directly and to store the data in said memory and also to store in the memory data relating to the location of the measurement and data relating to the time of the measurement, the data processing means further having means (10) for outputting the temporarily stored data from said memory after completion of the succession of measurements.

7. Portable apparatus according to claim 6 further having a terminal (4) for input, by the operator, to the data processing means of the data relating to the location of each measurement.

8. Portable apparatus according to claim 6 wherein the data processing means (2) is programmed to store data relating to the location of each measurement, in accordance with a predetermined measuring sequence.

9. Portable apparatus according to any one of claims 6 to 8 wherein the data processing means (2) has a digital clock (7) for providing data relating to the time of each measurement, which is entered directly in the digital memory.

0098644

10.    Portable apparatus according to any one
of claims 6 to 9 wherein the data processing means
(2) including the digital memory, the terminal (if
provided) and the clock (if provided) is arranged
as a portable unit (8) separate from the pyrometer
(1), there being a connection (11,12) for data transmission
between the pyrometer and the data processing means.

fig.1

0098644

fig. 2